# EUROPÄISCHE PATENTANMELDUNG

(11) **EP 4 851 926 A1**
(43) Veröffentlichungstag der Anmeldung: **09.12.2026**
(21) Anmeldenummer: 25181453.9
(22) Anmeldetag: 06.06.2025
(51) Int. Cl.: G06T 9/00, G06N 20/00, G06V 10/426, H04N 19/25, H04N 19/90

(54) **VERBESSERTE KOMPRIMIERUNG EINER ZEITABHÄNGIGEN SZENERIE ÜBER EINEN SZENEGRAPHEN**

(71) Anmelder: Robert Bosch GmbH, 70442 Stuttgart (DE)
(72) Erfinder: Tatarchenko, Maxim, 13059 Berlin (DE); Kall, Jochen, 31137 Hildesheim (DE); Mummadi, Chaithanya Kumar, Coraopolis, PA 15108 (US); Schreiber, Marcel, 89231 Neu-Ulm (DE); Miller, John, Pittsburgh, PA 15217 (US); Abdulatif, Sherif, 70191 Stuttgart (DE); Vertens, Johan, 72250 Freudenstadt (DE); John, Dalina, 31199 Diekholzen (DE)

(57) **Zusammenfassung**

Verfahren (100) zum Komprimieren der zeitabhängigen Entwicklung einer Szenerie (1), die als zeitliche Abfolge von Records (2) von Messdaten vorliegt, in eine datensparsame Repräsentation (3), mit den Schritten:
• unter Heranziehung der Records (2) von Messdaten wird ein Szenegraph (4) ermittelt (110), der für ein oder mehrere zu der Szenerie (1) gehörende Objekte (5) mindestens ein Zeitprogramm der Position des jeweiligen Objekts (5) angibt;
• unter Heranziehung des Szenegraphen (4) werden Rekonstruktionen (2#) von Records (2) von Messdaten als Superpositionen (6) ortsabhängiger Beiträge eines Satzes von Basisfunktionen aufgestellt (120);
• mit einer vorgegebenen Kostenfunktion (7) wird bewertet (130), inwieweit die Rekonstruktionen (2#) mit den ursprünglichen Records (2) von Messdaten im Einklang stehen;
• Parameter (4a, 6a), die den Szenegraphen (4) sowie die Superpositionen (6) der ortsabhängigen Beiträge charakterisieren, werden auf das Ziel optimiert (170), dass bei weiterer Bildung von Rekonstruktionen (2#) die Bewertung (7a) durch die Kostenfunktion (7) verbessert wird; und
• aus den fertig optimierten Parametern (4a*, 6a*) wird die gesuchte datensparsame Repräsentation (3) gebildet (180),
wobei das Optimieren (170) von Parametern (4a), die den Szenegraphen (4) charakterisieren, umfasst, mindestens ein zu der Szenerie (1) gehörendes Objekt (5) in mindestens zwei Teilobjekte (5a, 5b) aufzuteilen (171).

## Beschreibung

Die vorliegende Erfindung betrifft die Modellierung von Szenerien mit bewegten Objekten, die beispielsweise genutzt werden kann, um Bilder oder andere Messdaten dieser Szenerien zu synthetisieren.

### Stand der Technik

Das zumindest teilweise automatisierte Führen von Fahrzeugen oder Robotern auf einem Betriebsgelände oder im öffentlichen Straßenverkehr erfordert eine ständige Überwachung des Umfelds des Fahrzeugs bzw. Roboters mit Kameras und/oder anderen Sensoren. Die von den Sensoren gelieferten Messdaten werden meistens mit Machine Learning-Modellen ausgewertet.

Für das Training dieser Machine Learning-Modelle werden Trainings-Beispiele in großer Zahl benötigt. Diese Trainings-Beispiele müssen mit ihren jeweiligen semantischen Inhalten die im realen Verkehr vorkommenden Situationen ausreichend abdecken. Dabei ist es häufig schwierig, auch für Situationen, die nur selten in der Realität vorkommen, genügend Trainings-Beispiele zu erhalten. Trainings-Beispiele auf langen Testfahrten real aufzunehmen reicht oft nicht aus. Daher werden Trainings-Beispiele synthetisiert.

Hierfür hat es sich etabliert, eine Repräsentation einer realen Szenerie datenbasiert zu lernen. Dabei entsteht ein zeitabhängiger Szenegraph, über den die einzelnen Objekte in Beziehung gesetzt und relativ zueinander per zeitabhängiger Transformation beschrieben werden. Der Szenegraph kann dann gezielt verändert werden, um hieraus ein Trainings-Beispiel einer Szenerie mit einem abgewandelten semantischen Inhalt zu synthetisieren.

### Offenbarung der Erfindung

Die Erfindung stellt ein Verfahren zum Komprimieren der zeitabhängigen Entwicklung einer Szenerie, die als zeitliche Abfolge von Records von Messdaten vorliegt, in eine datensparsame Repräsentation bereit.

Hierbei ist der Begriff "Record" analog zur Verwendung des englischen Begriffs "record" zu sehen und bezeichnet eine Sammlung von Werten zusammenhängender Messgrößen und anderer Daten, vergleichbar mit dem Inhalt einer Karteikarte. Der intuitivere Begriff "Datensatz" ist im Sprachgebrauch auf dem Fachgebiet des Machine Learnings bereits belegt für eine Menge vieler Records, vergleichbar mit einem mit vielen Karteikarten gefüllten Karteikasten.

Im Rahmen dieses Verfahrens wird unter Heranziehung der Records von Messdaten ein Szenegraph ermittelt, der für ein oder mehrere zu der Szenerie gehörende Objekte mindestens ein Zeitprogramm der Position des jeweiligen Objekts angibt. Ein solcher Szenegraph kann beispielsweise initialisiert werden, indem mit einem Objektdetektor Objektinstanzen in der Szenerie erkannt werden. Das Zeitprogramm der Position einer jeden Objektinstanz, weitere Eigenschaften eines jeden Objekts, Wechselwirkungen mit anderen Objekten sowie alle weiteren Informationen, die im Szenegraphen benötigt werden, können als freie Parameter im Szenegraphen gelassen werden. Die Parameter können dann datenbasiert so optimiert werden, dass der Szenegraph die vorhandene Szenerie optimal beschreibt.

Unter Heranziehung des Szenegraphen werden Rekonstruktionen von Records von Messdaten als Superpositionen ortsabhängiger Beiträge eines Satzes von Basisfunktionen aufgestellt. Diese Superposition kann noch durch weitere Parameter charakterisiert sein, die nicht im Szenegraphen enthalten sind. Auch diese Parameter können datenbasiert so optimiert werden, dass der Szenegraph die vorhandene Szenerie optimal beschreibt.

Um an die optimalen Werte für alle Parameter zu kommen, wird mit einer vorgegebenen Kostenfunktion bewertet, inwieweit die Rekonstruktionen mit den ursprünglichen Records von Messdaten im Einklang stehen. Die Parameter, die den Szenegraphen sowie die Superpositionen der ortsabhängigen Beiträge charakterisieren, werden auf das Ziel optimiert, dass bei weiterer Bildung von Rekonstruktionen die Bewertung durch die Kostenfunktion verbessert wird. Aus den fertig optimierten Parametern wird die gesuchte datensparsame Repräsentation gebildet. Das heißt, wenn die Parameter fertig optimiert sind, enthalten sie die benötigte Information, um die Szenerie, so wie sie durch die existierenden Records von Messdaten beschrieben wird, gut rekonstruieren zu können.

Eine wesentliche Neuerung ist nun, dass das Optimieren von Parametern, die den Szenegraphen charakterisieren, umfasst, mindestens ein zu der Szenerie gehörendes Objekt in mindestens zwei Teilobjekte aufzuteilen. Das heißt, die Struktur des Szenegraphen und seine Zusammensetzung aus Objekten sind nicht mehr statisch, sondern werden fortwährend angepasst. Das Aufteilen kann insbesondere beispielsweise beinhalten, dass aus dem ursprünglichen Objekt ein Teilobjekt abgespalten wird, so dass anschließend dieses Teilobjekt und der Rest des ursprünglichen Objekts als separate Entitäten geführt werden. Der Rest des ursprünglichen Objekts kann also als großes zweites Teilobjekt verbleiben.

Es wurde erkannt, dass auf diese Weise die Repräsentation einer zeitabhängigen Szenerie insbesondere dann deutlich verbessert werden kann, wenn sich Teile eines Objekts relativ zum Rest des Objekts bewegen. Wenn die Szenerie beispielsweise ein Fahrzeug enthält, bewegt sich dieses Fahrzeug nicht nur als Ganzes. Vielmehr wird diese Bewegung dadurch bewirkt, dass sich die Räder des Fahrzeugs um ihre eigene Achse drehen. Außerdem können die Räder noch eingeschlagen werden, um das Fahrzeug in eine andere Richtung zu lenken. Dies wird durch den Szenegraphen nicht optimal abgebildet, wenn dort nur das Fahrzeug als Ganzes enthalten ist. Die gelernte Repräsentation der Szenerie wird dann bezüglich der sich drehenden Räder lediglich über die Zeit gemittelte Durchschnittswerte lernen. Wenn hieraus dann beispielsweise Bilder als Records von Messdaten rekonstruiert werden, werden die Räder hierin unscharf (matschig) dargestellt. Das heißt, auf der Bildebene werden die sich auf die Räder beziehenden Pixel das Original nicht gut nachbilden.

Es wurde zugleich erkannt, dass es nicht sinnvoll ist, den Szenegraphen bei jeder sich bietenden Gelegenheit durch Aufteilung von Objekten in Teilobjekte immer feiner zu machen. Hierdurch wird nicht nur die letztendlich erhaltene Repräsentation der Szenerie deutlich aufgebläht. Vielmehr können hierdurch auch Artefakte entstehen, die die Repräsentation qualitativ verschlechtern.

Wenn beispielsweise eine Reflexion einer Lichtquelle auf dem Lack des Fahrzeugs zeitabhängig ist, weil sich das Fahrzeug relativ zur Lichtquelle (etwa Straßenlaterne oder Tunnelbeleuchtung) bewegt, kann dies als Überlagerung eines von außen nach innen im Fahrzeug verschwindenden Beitrags und eines von innen nach außen aus dem Fahrzeug heraustretenden und dabei sichtbar werdenden Anteils dargestellt werden. Dies hat mit der physikalischen Realität nichts zu tun. Stattdessen sollte die Repräsentation abbilden, dass die Oberfläche des Fahrzeuglacks eine Reflektivität aufweist.

In einem anderen Beispiel kann eine uniforme Oberfläche, wie etwa eine Tischplatte, als Superposition mehrerer Basisfunktionen dargestellt sein. Wenn nun angestrebt ist, Objekte möglichst immer in Teilobjekte aufzuteilen, dann kann die Tischplatte beispielsweise in Teilobjekte aufgeteilt werden, die im Laufe der Zeit ihre Positionen vertauschen. Die Superposition ist dann immer noch die statische Tischplatte, aber dass innerhalb dieses statischen Objekts eine Bewegung stattfindet, hat auch wieder nichts mit der physikalischen Realität zu tun.

Daher wird im Rahmen des hier vorgeschlagenen Verfahrens eine Aufteilung in Teilobjekte nur dann angestrebt, wenn sich hierdurch eine Verbesserung in Bezug auf die Genauigkeit der aus der Repräsentation erhältlichen Rekonstruktion erzielen lässt.

Das Verfeinern des Szenegraphen durch Aufteilen mindestens eines Objekts in mindestens zwei Teilobjekte kann insbesondere beispielsweise iterativ fortgesetzt werden. So können beispielsweise die Teilobjekte in der nächsten Iteration wiederum in Teilobjekte unterteilt werden. Das heißt, es kann eine hierarchische Struktur des Szenegraphen fortgebildet werden. Für das iterative Verfeinern des Szenegraphen, und/oder für die Optimierung der Parameter insgesamt, kann eine beliebige Abbruchbedingung gesetzt werden. Eine solche Abbruchbedingung kann insbesondere beispielsweise beinhalten, dass trotz der Verfeinerung keine weitere signifikante Verbesserung der Bewertung durch die Kostenfunktion mehr erzielt wird. Hierfür kann ein beliebiges Kriterium festgesetzt werden, wie beispielsweise ein Schwellwert für die absolute und/oder relative Änderung des Werts der Kostenfunktion.

In einer besonders vorteilhaften Ausgestaltung wird mindestens ein Schlecht-Anteil einer Rekonstruktion ermittelt, der nach Maßgabe eines vorgegebenen Kriteriums besonders schlecht im Einklang mit Records von Messdaten im Einklang steht. Es wird mindestens ein Objekt im Szenegraphen ermittelt, zu dem dieser Schlecht-Anteil korrespondiert. Dieses Objekt wird in mindestens zwei Teilobjekte aufgeteilt. Auf diese Weise wird die Aufteilung in Teilobjekte gerade auf solche Objekte fokussiert, bei denen eine berechtigte Aussicht darauf besteht, dass dies die Genauigkeit der aus der Repräsentation erhältlichen Rekonstruktion verbessert. Das heißt, der Auslöser für eine Aufteilung in Teilobjekte ist die Feststellung, dass eine konkrete Stelle in der Repräsentation keine gute Rekonstruktion der durch die existierenden Records von Messdaten beschriebenen, gegebenen Szenerie ermöglicht.

Hierbei kann das vorgegebene Kriterium insbesondere beispielswiese eine über die Zeit akkumulierte Abweichung des Schlecht-Anteils von einem hierzu korrespondierenden Anteil von Records von Messdaten umfassen. Auf diese Weise können insbesondere solche Schlecht-Anteile erfasst werden, die von einer Bewegung von Teilen eines Objekts gegen den Rest dieses Objekts herrühren, wie beispielsweise der bereits erwähnten Räder eines Fahrzeugs.

In einer weiteren besonders vorteilhaften Ausgestaltung umfasst das vorgegebene Kriterium für die Auswahl des Schlecht-Anteils eine Verschlechterung der Auflösung und/oder Schärfe des Schlecht-Anteils gegenüber dem Rest der Rekonstruktion. Das heißt, wenn ein Anteil eines rekonstruierten Records von Messdaten schlechter aufgelöst ist als andere Anteile, kann ein Objekt im Szenegraphen, von dem dieser Anteil herrührt, für die Aufteilung in Teilobjekte ausgewählt werden. Offenkundige Probleme bei der Rekonstruktion sind also der Auslöser für eine Verfeinerung des Szenegraphen.

In einer weiteren besonders vorteilhaften Ausgestaltung umfasst das Ermitteln mindestens eines Objekts, zu dem Schlecht-Anteile korrespondieren, ein Clustern der Schlecht-Anteile, und/oder von zu den Schlecht-Anteilen korrespondierenden Anteilen mindestens einer Superposition. Hierhinter steckt die Überlegung, dass Objekte in der Regel eine räumliche Ausdehnung haben. Wenn also Schlecht-Anteile räumlich zusammenhängen, gehören sie wahrscheinlich zum gleichen Objekt.

In einer weiteren besonders vorteilhaften Ausgestaltung umfasst das Ermitteln mindestens eines Objekts, zu dem Schlecht-Anteile korrespondieren, ein Aufteilen der Bewertung durch die Kostenfunktion auf die ortsabhängigen Beiträge entsprechend der Gewichtung dieser Beiträge bei der Bildung des Schlecht-Anteils. Wenn also beispielsweise ein Bildpixel eine Mischung aus
- einem mit 0,5 gewichteten Beitrag einer Basisfunktion A,
- einem mit 0,3 gewichteten Beitrag einer Basisfunktion B und
- einem mit 0,2 gewichteten Beitrag einer Basisfunktion C ist,
dann werden Fehler der Rekonstruktion dementsprechend
- zu 0,5 dem Objekt, auf das der Beitrag der Basisfunktion A zurückgeht,
- zu 0,3 dem Objekt, auf das der Beitrag der Basisfunktion B zurückgeht, und
- zu 0,2 dem Objekt, auf das der Beitrag der Basisfunktion C zurückgeht, zugeschlagen. Das heißt, der "Verursacher" einer schlechten Rekonstruktion im Szenegraphen lässt sich ermitteln, ohne dass eine Beurteilung durch die Kostenfunktion mathematisch "zurückpropagiert" werden muss wie etwa beim Trainieren eines neuronalen Netzwerks.

In einer weiteren besonders vorteilhaften Ausgestaltung legen die Superpositionen ortsabhängiger Beiträge Radianzfelder fest, die jeweils ortsabhängige Verteilungen von Farbe und Deckkraft zu bestimmten Zeitpunkten definieren. Das Ermitteln der Rekonstruktionen umfasst dann, derartige Radianzfelder entlang von Sichtlinien zu integrieren. Auf diese Weise können Bilder als Records von Messdaten rekonstruiert werden.

Es kann insbesondere beispielsweise mindestens eine Verteilungsfunktion, die Anteilen von Records von Messdaten ein Maß für eine Wahrscheinlichkeit zuordnet, als Basisfunktion gewählt werden. Die von einer Verteilungsfunktion gelieferten Beiträge sind besonders gut interpretierbar und auch motivierbar. Somit haben die aus derartigen Beiträgen zusammengesetzten Repräsentationen für sich genommen eine Bedeutung, die beispielsweise besonders gut von einem nachgeschalteten, auf eine bestimmte Aufgabe (Task) trainierten neuronalen Netzwerk (Task-Netzwerk) weiter ausgewertet werden kann.

Ein Beispiel für eine derartige Verteilungsfunktion ist eine Wahrscheinlichkeitsdichtefunktion einer Gauß-Verteilung, auch oft kurz als "Gauß-Funktion" bezeichnet. Eine derartige Funktion kann beispielsweise durch
- drei Parameter für die räumliche Verschiebung in den drei Koordinatenrichtungen des kartesischen Raums,
- drei Parameter für die Skalierung in diesen drei Koordinatenrichtungen,
- vier Parameter für die Orientierung der Funktion im Raum,
- drei Parameter für die Angabe der Farbe, mit der sich der Beitrag der Funktion in der Superposition auswirkt, in den drei additiven Grundfarben Rot, Grün und Blau, und
- optional zusätzlich Geschwindigkeitsvektoren für eine Translation und/oder Rotation
charakterisiert werden. All diese Parameter stehen in den Argumenten von Sinus, Kosinus bzw. Exponentialfunktion. Somit ist die Gauß-Funktion problemlos nach diesen Parametern differenzierbar.

Wie zuvor erläutert, umfasst in einer besonders vorteilhaften Ausgestaltung mindestens ein Record von Messdaten ein Bild. Ein Bild lässt sich besonders gut als Abmischung ortsabhängiger Beiträge verschiedener Basisfunktionen darstellen. Prinzipiell ist dies aber auch beispielsweise mit Punktwolken als Messdaten möglich, indem die Beiträge der verschiedenen Basisfunktionen zusammengefügt werden. Es kann also beispielsweise die Vereinigungsmenge der Punkte, die die verschiedenen Basisfunktionen zur Punktwolke beitragen, gebildet werden.

In einer weiteren besonders vorteilhaften Ausgestaltung wird unter Heranziehung der datensparsamen Repräsentation, und/oder einer Abwandlung dieser Repräsentation, ein synthetischer und zugleich realistischer Record von Messdaten generiert. Dieser Record, wie beispielsweise ein Bild, kann dann in der gleichen Weise verwendet werden wie tatsächlich mit Sensoren aufgenommene Records. Es kann insbesondere beispielswiese der semantische Inhalt gezielt editiert und ein realistischer Record von Messdaten, der sich auf diesen geänderten semantischen Inhalt bezieht, erzeugt werden.

Beispielsweise kann auf der Basis eines Szenegraphen, der sich auf eine reale Verkehrssituation bezieht, eine Abwandlung erzeugt werden, die sich auf eine seltene, aber gefährliche Verkehrssituation bezieht. Auf diese Weise können etwa realistisch aussehende Bilder derartiger Verkehrssituationen erstellt werden, ohne diese Verkehrssituationen in der Realität nachstellen zu müssen, was auf Grund der Gefährlichkeit oft gar nicht möglich ist.

So kann etwa ein Möbelstück, das in der Realität ordnungsgemäß auf einem Fahrzeug festgezurrt ist, durch Abänderung des Szenegraphen auf die Fahrbahn verlagert werden, so als hätte das Fahrzeug dieses Möbelstück verloren. Auch kann etwa ein Fußgänger, der ordnungsgemäß auf dem Gehweg unterwegs ist, durch eine einfache Änderung seiner Position im Szenegraphen auf die Fahrbahn verlagert werden. Mit derartigen Bildern kann etwa getestet werden, ob ein automatisiert fahrendes Fahrzeug, bzw. ein automatisiert fahrender Roboter, auf solche Situationen richtig reagiert.

In einer weiteren besonders vorteilhaften Ausgestaltung wird unter Heranziehung des synthetisch generierten Records von Messdaten ein Machine Learning-Modell trainiert wird, das aus Records von Messdaten Ausgaben im Hinblick auf mindestens eine vorgegebene Aufgabe ermittelt. Das Machine Learning-Modell kann beispielsweise ein Klassifikator, wie etwa ein Bildklassifikator, sein. Beispielsweise kann das Machine Learning-Modell die Szenerie als Ganzes klassifizieren. Von den hierbei ermittelten Klassifikations-Scores in Bezug auf eine oder mehrere Klassen kann dann etwa die Entscheidung abhängen, wie die Szenerie summarisch bewertet wird (beispielsweise bezüglich des Gefährdungspotentials einer Verkehrssituation) oder welche Aktion eines Fahrzeugs bzw. Roboters für die nächste Zukunft vorgeschlagen wird. Indem die Menge der Trainings-Beispiele um zusätzliche synthetisch generierte Trainings-Beispiele angereichert wird, wird das trainierte Machine Learning-Modell dazu befähigt, auch ungewöhnliche und seltene Szenerien richtig zu beurteilen.

In einer weiteren besonders vorteilhaften Ausgestaltung werden dem trainierten Machine Learning-Modell Records von Messdaten zugeführt, die mit mindestens einem Sensor aufgenommen wurden. Aus der vom Machine Learning-Modell gelieferten Ausgabe wird ein Ansteuersignal ermittelt. Ein Fahrzeug, ein Roboter, ein Fahrassistenzsystem, ein System zur Qualitätskontrolle, ein System zur Überwachung von Bereichen, und/oder ein System zur medizinischen Bildgebung, wird mit dem Ansteuersignal angesteuert. Auf diese Weise ist die Wahrscheinlichkeit erhöht, dass die Reaktion des jeweils angesteuerten Systems auf das Ansteuersignal der durch die Records von Messdaten charakterisierten Szenerie angemessen ist.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Komprimieren der zeitabhängigen Entwicklung einer Szenerie 1 in eine datensparsame Repräsentation 3;
Figur 2 Beispielhafte Veränderung des Szenegraphen 4 bei der Durchführung des Verfahrens 100;
Figur 3 Beispielhaftes Ermitteln neuer Teilobjekte 5a, 5b mit Hilfe des Clusterns von Schlecht-Anteilen 2*.

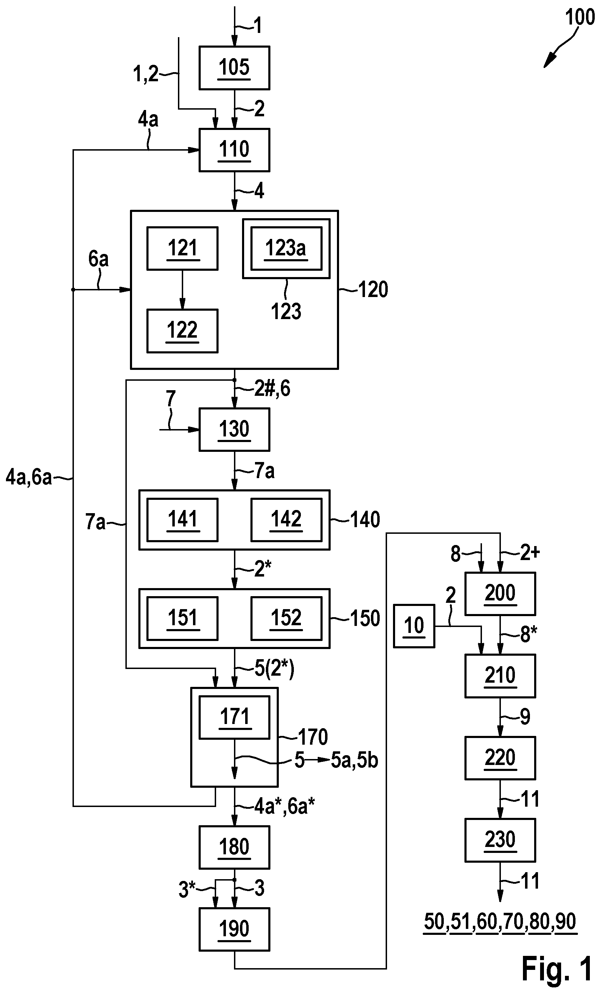

Figur 1 ist ein schematisches Ablaufdiagramm eines Ausführungsbeispiels des Verfahrens 100 zum Komprimieren der zeitabhängigen Entwicklung einer Szenerie 1, die als zeitliche Abfolge von Records 2 von Messdaten vorliegt, in eine datensparsame Repräsentation 3.

Gemäß Block 105 kann mindestens ein Record 2 von Messdaten ein Bild umfassen.

In Schritt 110 wird unter Heranziehung der Records 2 von Messdaten ein Szenegraph 4 ermittelt, der für ein oder mehrere zu der Szenerie 1 gehörende Objekte 5 mindestens ein Zeitprogramm der Position des jeweiligen Objekts 5 angibt.

In Schritt 120 werden unter Heranziehung des Szenegraphen 4 Rekonstruktionen 2# von Records 2 von Messdaten als Superpositionen 6 ortsabhängiger Beiträge eines Satzes von Basisfunktionen aufgestellt. Mit anderen Worten, diese Rekonstruktionen 2# werden mit Hilfe eines Ansatzes, der diese Superpositionen 6 umfasst, ermittelt.

Gemäß Block 121 können die Superpositionen 6 ortsabhängiger Beiträge Radianzfelder festlegen, die jeweils ortsabhängige Verteilungen von Farbe und Decckraft zu bestimmten Zeitpunkten definieren. Gemäß Block 122 kann das Ermitteln der Rekonstruktionen dann umfassen, derartige Radianzfelder entlang von Sichtlinien zu integrieren.

Gemäß Block 123 kann mindestens eine Verteilungsfunktion, die Anteilen von Records von Messdaten ein Maß für eine Wahrscheinlichkeit zuordnet, als Basisfunktion gewählt werden. Insbesondere kann gemäß Block 123a mindestens eine Wahrscheinlichkeitsdichtefunktion einer Gauß-Verteilung als Verteilungsfunktion gewählt werden.

In Schritt 130 wird mit einer vorgegebenen Kostenfunktion 7 bewertet, inwieweit die Rekonstruktionen 2# mit den ursprünglichen Records (2) von Messdaten im Einklang stehen. Es entsteht eine Bewertung 7a.

In Schritt 170 werden Parameter 4a, die den Szenegraphen 4 charakterisieren, und Parameter 6a, die die Superpositionen 6 der ortsabhängigen Beiträge charakterisieren, auf das Ziel optimiert, dass bei weiterer Bildung von Rekonstruktionen 2# die Bewertung 7a durch die Kostenfunktion 7 verbessert wird. Dies umfasst gemäß Block 171, mindestens ein zu der Szenerie 1 gehörendes Objekt 5 in mindestens zwei Teilobjekte 5a, 5b aufzuteilen und insoweit den Szenegraphen 4 abzuändern.

In dem in Figur 1 gezeigten Beispiel wird zu diesem Zweck in Schritt 140 mindestens ein Schlecht-Anteil 2* einer Rekonstruktion 2# ermittelt, der nach Maßgabe eines vorgegebenen Kriteriums besonders schlecht im Einklang mit Records 2 von Messdaten im Einklang steht.

Gemäß Block 141 kann das vorgegebene Kriterium eine über die Zeit akkumulierte Abweichung des Schlecht-Anteils 2* von einem hierzu korrespondierenden Anteil von Records 2 von Messdaten umfassen.

Gemäß Block 142 kann das vorgegebene Kriterium eine Verschlechterung der Auflösung und/oder Schärfe des Schlecht-Anteils 2* gegenüber dem Rest der Rekonstruktion 2# umfassen.

In dem in Figur 1 gezeigten Beispiel wird in Schritt 150 mindestens ein Objekt 5 im Szenegraphen 4 ermittelt, zu dem der Schlecht-Anteil 2* korrespondiert.

Gemäß Block 151 kann das Ermitteln mindestens eines Objekts 5, zu dem Schlecht-Anteile 2* korrespondieren, ein Clustern der Schlecht-Anteile 2* umfassen.

Gemäß Block 152 kann das Ermitteln mindestens eines Objekts 5, zu dem Schlecht-Anteile 2* korrespondieren, ein Aufteilen der Bewertung 7a durch die Kostenfunktion 7 auf die ortsabhängigen Beiträge entsprechend der Gewichtung dieser Beiträge bei der Bildung des Schlecht-Anteils 2* umfassen.

Die Optimierung in Schritt 170 liefert die fertig optimierten Zustände 4a*, 6a* der Parameter 4a bzw. 6a. In Schritt 180 wird aus diesen fertig optimierten Parametern 4a*, 6a* die gesuchte datensparsame Repräsentation 3 gebildet. Von dieser datensparsamen Repräsentation 3 können optional Abwandlungen 3* gebildet werden, um Records von Messdaten mit verändertem semantischem Inhalt zu synthetisieren.

Dies geschieht in dem in Figur 1 gezeigten Beispiel, indem in Schritt 190 unter Heranziehung der datensparsamen Repräsentation 3, und/oder einer Abwandlung 3* dieser Repräsentation 3*, ein synthetischer und zugleich realistischer Record 2+ von Messdaten generiert wird.

In Schritt 200 wird dann unter Heranziehung des synthetisch generierten Records 2+ von Messdaten ein Machine Learning-Modell 8 trainiert. Dieses Machine Learning-Modell 8 ist dazu ausgebildet, aus Records 2 von Messdaten Ausgaben 9 im Hinblick auf mindestens eine vorgegebene Aufgabe zu ermitteln. Der fertig trainierte Zustand des Machine Learning-Modells 8 ist mit dem Bezugszeichen 8* bezeichnet.

In Schritt 210 werden dem trainierten Machine Learning-Modell 8* Records 2 von Messdaten zugeführt, die mit mindestens einem Sensor 10 aufgenommen wurden. Aus der daraufhin vom Machine Learning-Modell 8* gelieferten Ausgabe 9 wird in Schritt 220 ein Ansteuersignal 11 ermittelt. In Schritt 230 wird ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 11 angesteuert.

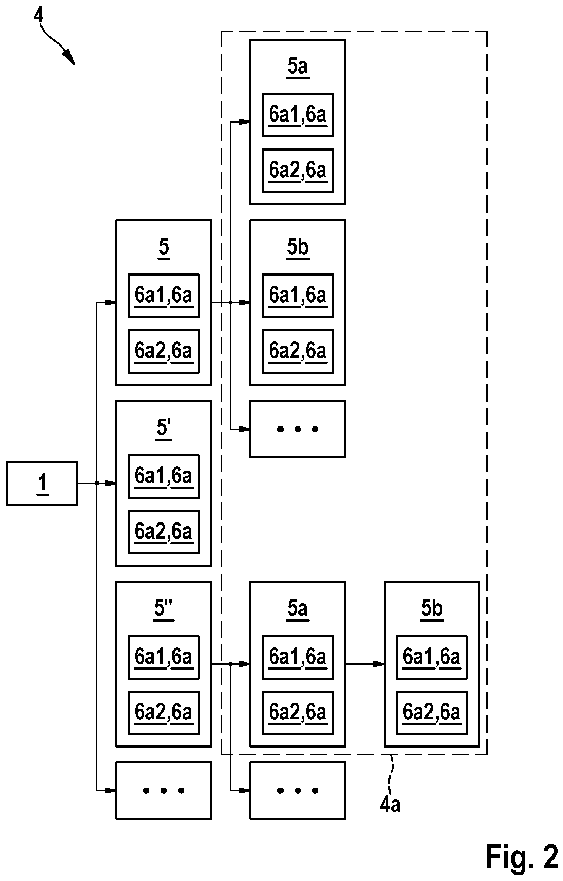

Figur 2 veranschaulicht an einem Beispiel, wie der Szenegraph 4 einer Szenerie 1 während der Durchführung des Verfahrens 100 iterativ angepasst werden kann.

Zunächst umfasst der Szenegraph 4 drei Objekte 5, 5' und 5". Für jedes dieser Objekte 5, 5' und 5" sind, auf welche Weise auch immer, die jeweiligen Wirkungen auf die Parameter 6a der Superpositionen 6 abgespeichert. Beispielsweise können Verweise 6a1 auf Basisfunktionen der Superpositionen 6 sowie Anweisungen 6a2 zur Anwendung von Transformationen auf diese Basisfunktionen abgespeichert sein.

In dem in Figur 2 gezeigten Beispiel sind vom Objekt 5 (hier: ein Fahrzeug) zwei Teilobjekte 5a und 5b (hier: Räder) abgespalten worden. Für jedes dieser Teilobjekte 5a und 5b werden wiederum Verweise 6a1 und Anweisungen 6a2 abgespeichert, in der gleichen Weise wie für das ursprüngliche Objekt 5.

Weiterhin ist aus dem Objekt 5" (hier: ein Karussell) zunächst ein Teilobjekt 5a (hier: ein Drehteller) abgespalten worden, von dem dann seinerseits ein Teilobjekt 5b (hier: eine gegen den Drehteller drehbare Drehtasse) abgespalten wurde.

Das Objekt 5' ist in dem in Figur 2 gezeigten Beispiel eine Person, die nicht weiter aufgeteilt wird. Die Modellierung über den Szenegraphen ermöglicht es jedoch auch, beispielsweise Deformationen von Objekten einfach darzustellen.

Die Aufteilung von Objekten 5, 5' und 5" in jeweilige Teilobjekte 5a, 5b, hier durch Abspalten vom jeweils restlichen Objekt 5, 5' bzw. 5", gehört zu den Parametern 4a, die den Szenegraphen charakterisieren und gemäß dem hier vorgeschlagenen Verfahren 100 Gegenstand der Optimierung sind.

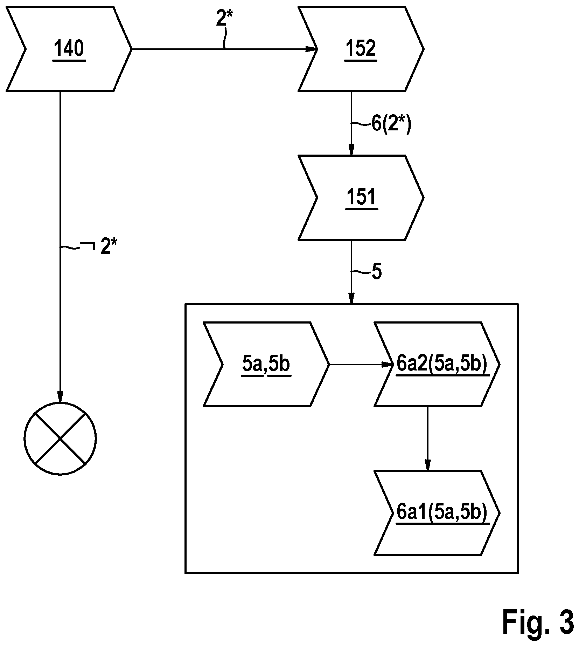

Figur 3 veranschaulicht, wie mit Hilfe des Clusterns von Schlecht-Anteilen 2* der Rekonstruktionen 2#, die nicht gut mit Records 2 von Messdaten in Einklang stehen, Objekte 5 identifiziert werden können, die in mindestens zwei Teilobjekte 5a, 5b aufgeteilt werden sollten.

In Schritt 140 des Verfahrens 100 wird geprüft, inwieweit es Schlecht-Anteile 2* gibt, die ein vorgegebenes Kriterium erfüllen. Beispielsweise kann dieses Kriterium einen über die Zeit akkumulierten Wert 7a der Kostenfunktion 7, der etwa von einer über die Zeit akkumulierten Abweichung des potentiellen Schlecht-Anteils 2* von einem hierzu korrespondierenden Anteil von Records 2) von Messdaten abhängen kann, umfassen.

Wenn es Schlecht-Anteile 2* gibt, wird in dem in Figur 3 gezeigten Beispiel gemäß Block 152 die Bewertung 7a durch die Kostenfunktion 7 auf die ortsabhängigen Beiträge in der Superposition 6 entsprechend der Gewichtung dieser Beiträge bei der Bildung des Schlecht-Anteils 2* aufgeteilt. Es wird also ermittelt, welcher Anteil 6(2*) der Superposition 6 für den Schlecht-Anteil 2* verantwortlich ist. Diese Anteile 6(2*) werden gemäß Block 151 geclustert, um so zu mindestens einem Objekt 5 zu gelangen, das in zwei oder mehr Teilobjekte 5a, 5b aufzuteilen ist.

Für diese Teilobjekte 5a, 5b werden in dem in Figur 3 gezeigten Beispiel zunächst die Transformationen 6a2 ermittelt, beispielsweise mit einer "Structure from Motion"-Methode oder mit einem trainierten Machine Learning-Modell. Anschließend werden die zuvor für die Schlecht-Anteile 2* verantwortlichen Basisfunktionen den neuen Teilobjekten 5a, 5b zugewiesen. Das heißt, diese Teilobjekte 5a, 5b werden mit neuen Verweisen 6a1 auf Basisfunktionen ausgestattet.

## Patentansprüche

1. Verfahren (100) zum Komprimieren der zeitabhängigen Entwicklung einer Szenerie (1), die als zeitliche Abfolge von Records (2) von Messdaten vorliegt, in eine datensparsame Repräsentation (3), mit den Schritten:
• unter Heranziehung der Records (2) von Messdaten wird ein Szenegraph (4) ermittelt (110), der für ein oder mehrere zu der Szenerie (1) gehörende Objekte (5) mindestens ein Zeitprogramm der Position des jeweiligen Objekts (5) angibt;
• unter Heranziehung des Szenegraphen (4) werden Rekonstruktionen (2#) von Records (2) von Messdaten als Superpositionen (6) ortsabhängiger Beiträge eines Satzes von Basisfunktionen aufgestellt (120);
• mit einer vorgegebenen Kostenfunktion (7) wird bewertet (130), inwieweit die Rekonstruktionen (2#) mit den ursprünglichen Records (2) von Messdaten im Einklang stehen;
• Parameter (4a, 6a), die den Szenegraphen (4) sowie die Superpositionen (6) der ortsabhängigen Beiträge charakterisieren, werden auf das Ziel optimiert (170), dass bei weiterer Bildung von Rekonstruktionen (2#) die Bewertung (7a) durch die Kostenfunktion (7) verbessert wird; und
• aus den fertig optimierten Parametern (4a*, 6a*) wird die gesuchte datensparsame Repräsentation (3) gebildet (180),
wobei das Optimieren (170) von Parametern (4a), die den Szenegraphen (4) charakterisieren, umfasst, mindestens ein zu der Szenerie (1) gehörendes Objekt (5) in mindestens zwei Teilobjekte (5a, 5b) aufzuteilen (171).

2. Verfahren (100) nach Anspruch 1, wobei
• mindestens ein Schlecht-Anteil (2*) einer Rekonstruktion (2#) ermittelt wird (140), der nach Maßgabe eines vorgegebenen Kriteriums besonders schlecht im Einklang mit Records (2) von Messdaten im Einklang steht;
• mindestens ein Objekt (5) im Szenegraphen (4) ermittelt wird (150), zu dem dieser Schlecht-Anteil (2*) korrespondiert; und
• dieses Objekt (5) in mindestens zwei Teilobjekte aufgeteilt wird (171).

3. Verfahren (100) nach Anspruch 2, wobei das vorgegebene Kriterium eine über die Zeit akkumulierte Abweichung des Schlecht-Anteils (2*) von einem hierzu korrespondierenden Anteil von Records (2) von Messdaten umfasst (141).

4. Verfahren (100) nach einem der Ansprüche 2 bis 3, wobei das vorgegebene Kriterium eine Verschlechterung der Auflösung und/oder Schärfe des Schlecht-Anteils (2*) gegenüber dem Rest der Rekonstruktion (2#) umfasst (142).

5. Verfahren (100) nach einem der Ansprüche 2 bis 4, wobei das Ermitteln (150) mindestens eines Objekts (5), zu dem Schlecht-Anteile (2*) korrespondieren, ein Clustern der Schlecht-Anteile (2*), und/oder von zu den Schlecht-Anteilen (2*) korrespondierenden Anteilen mindestens einer Superposition (6), umfasst (151).

6. Verfahren (100) nach einem der Ansprüche 2 bis 5, wobei das Ermitteln (150) mindestens eines Objekts (5), zu dem Schlecht-Anteile (2*) korrespondieren, ein Aufteilen der Bewertung (7a) durch die Kostenfunktion (7) auf die ortsabhängigen Beiträge entsprechend der Gewichtung dieser Beiträge bei der Bildung des Schlecht-Anteils (2*) umfasst (152).

7. Verfahren (100) nach einem der Ansprüche 1 bis 6, wobei
• die Superpositionen (6) ortsabhängiger Beiträge Radianzfelder festlegen (121), die jeweils ortsabhängige Verteilungen von Farbe und Deckkraft zu bestimmten Zeitpunkten definieren, und
• das Ermitteln (120) der Rekonstruktionen umfasst (122), derartige Radianzfelder entlang von Sichtlinien zu integrieren.

8. Verfahren (100) nach einem der Ansprüche 1 bis 7, wobei mindestens eine Verteilungsfunktion, die Anteilen von Records von Messdaten ein Maß für eine Wahrscheinlichkeit zuordnet, als Basisfunktion gewählt wird (123).

9. Verfahren (100) nach Anspruch 8, wobei mindestens eine Wahrscheinlichkeitsdichtefunktion einer Gauß-Verteilung als Verteilungsfunktion gewählt wird (123a).

10. Verfahren (100) nach einem der Ansprüche 1 bis 9, wobei mindestens ein Record (2) von Messdaten ein Bild umfasst (105).

11. Verfahren (100) nach einem der Ansprüche 1 bis 10, wobei unter Heranziehung der datensparsamen Repräsentation (3), und/oder einer Abwandlung (3*) dieser Repräsentation (3*), ein synthetischer und zugleich realistischer Record (2+) von Messdaten generiert wird (190).

12. Verfahren (100) nach Anspruch 11, wobei unter Heranziehung des synthetisch generierten Records (2+) von Messdaten ein Machine Learning-Modell (8) trainiert wird (200), das aus Records (2) von Messdaten Ausgaben (9) im Hinblick auf mindestens eine vorgegebene Aufgabe ermittelt.

13. Verfahren (100) nach Anspruch 12, wobei
• dem trainierten Machine Learning-Modell (8*) Records (2) von Messdaten zugeführt werden (210), die mit mindestens einem Sensor (10) aufgenommen wurden,
• aus der vom Machine Learning-Modell (8*) gelieferten Ausgabe (9) ein Ansteuersignal (11) ermittelt wird (220), und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (11) angesteuert wird (230).

14. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 13 auszuführen.

15. Maschinenlesbarer Datenträger und/oder Downloadprodukt mit dem Computerprogramm nach Anspruch 14.

16. Ein oder mehrere Computer und/oder Compute-Instanzen mit dem Computerprogramm nach Anspruch 14, und/oder mit dem maschinenlesbaren Datenträger und/oder Downloadprodukt nach Anspruch 15.
